Europäisches Patentamt

European Patent Office

Office européen des brevets

(19)

(11) EP 1 128 033 A2

(12) EUROPEAN PATENT APPLICATION

(43) Date of publication:
29.08.2001 Bulletin 2001/35

(51) Int Cl.7: F01N 11/00, F02D 41/02,
F01N 3/08

(21) Application number: 01103674.6

(22) Date of filing: 23.02.2001

(84) Designated Contracting States:
AT BE CH CY DE DK ES FI FR GB GR IE IT LI LU
MC NL PT SE TR
Designated Extension States:
AL LT LV MK RO SI

(30) Priority: 28.02.2000 JP 2000051939

(71) Applicant: Hitachi, Ltd.
Chiyoda-ku, Tokyo 101-8010 (JP)

(72) Inventors:
• Nakagawa, Shinji
Hitachinaka-shi, Ibaraki 312-0063 (JP)

• Ohsuga, Minoru
Hitachinaka-shi, Ibaraki 312-0053 (JP)
• Ishii, Toshio
Mito-shi, Ibaraki 310-0054 (JP)
• Takaku, Yutaka
Mito-shi, Ibaraki 310-0843 (JP)
• Katogi, Kozo
Hitachi-shi, Ibaraki 316-0013 (JP)

(74) Representative: Beetz & Partner Patentanwälte
Steinsdorfstrasse 10
80538 München (DE)

(54) Diagnosis device for an engine

(57) A diagnosis system for an engine (100) including an exhaust pipe (10), a hydrocarbon (HC) absorbent (11) arranged within the exhaust pipe (10), an upstream air/fuel ratio sensor (12) arranged upstream of the HC absorbent (11) and detecting a wide range air/fuel ratio of an exhaust gas, a downstream air/fuel ratio sensor (13) arranged downstream of the HC absorbent (11) and detecting rich or lean with respect to stoichiometric air/fuel ratio of the exhaust gas, and a control unit (16), the control unit (16) includes means (31) for correcting an air/fuel ratio upstream of the HC absorbent (11), means (30) for correcting an air/fuel ratio downstream of the HC absorbent (11), and means (28) for predicting a HC absorbing amount of the HC absorbent (11), the means (31) for correcting the air/fuel ratio upstream of the HC absorbent (11) correcting and controlling an output value of the upstream air/fuel ratio sensor (12) toward lean, the means (28) for predicting the HC absorbing amount of the HC absorbent (11) predicting an absorbing performance of the HC absorbent (11) on the basis of a difference between an output value of the upstream air/fuel ratio sensor (12) and a predetermined value C during a period from a timing where a temperature of the HC absorbent (11) becomes higher than or equal to a predetermined value A and the output value of the upstream air/fuel ratio sensor (12) is corrected and controlled toward lean to a timing where the temperature becomes lower than or equal to a predetermined value B.

FIG. 1

**Description**

BACKGROUND OF THE INVENTION

The present invention relates to a diagnosis system of an engine, and particularly to a diagnosis system of a hydrocarbon absorbent of the engine having the hydrocarbon absorbent in an exhaust portion.

In a common internal combustion engine, it is typical to install a catalytic converter having a function oxidizing hydrocarbon (HC) as carbon hydride and carbon monoxide (CO) and reducing nitrogen oxide ($NO_x$) contained in an exhaust gas discharged from a combustion chamber of the engine, in an exhaust pipe of the engine. The catalytic converter has a property to bring out purifying function of HC, CO and $NO_x$ when a temperature of the exhaust gas is higher than or equal to a predetermined temperature but not to sufficiently purify the exhaust gas when the temperature of the exhaust gas is lower than or equal to the predetermined temperature.

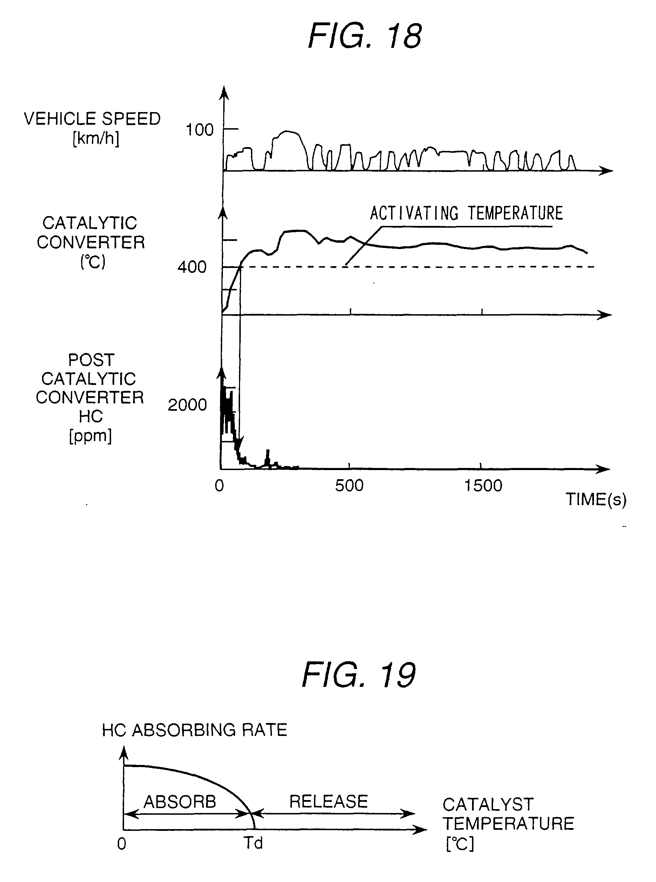

On the other hand, in general, since a temperature of the catalytic converter arranged in the foregoing exhaust pipe is equal to an ambient temperature upon starting up of the engine and is lower than the exhaust gas temperature, a purifying performance of the exhaust gas by the catalytic converter is significantly low during a period until the catalytic converter is heated by the exhaust gas to be higher than or equal to the predetermined temperature, at which the catalytic converter is activated, as shown in Fig. 18. In order to solve this problem, as shown in Fig. 19, an exhaust gas purifying system, in which a HC absorbent absorbing HC at low temperature and releasing HC when the temperature becomes higher than or equal to a predetermined temperature Td, is arranged in the exhaust pipe and the released HC is purified by the catalytic converter provided downstream of the HC absorbent or the catalytic converter provided on the same catalyst support with the HC absorbent.

Here, in the exhaust purifying system, in view of the fact that when the absorbing performance of the HC absorbent is degraded in certain cause, HC can be discharged even at low temperature to be a cause of significant degradation of exhaust characteristics, it is required to appropriately detect degradation of absorbing performance of the HC absorbent. Thus, a technology disclosed in Japanese Patent Application Laid-Open No. Heisei 08-121232 has been proposed.

The technology disclosed in Japanese Patent Application Laid-Open No. Heisei 08-121232 is constructed to arrange air/fuel ratio sensors (A/F sensors) linearly detecting an air/fuel ratio on upstream and downstream of the HC absorbent as means for detecting degradation of performance of the HC absorbent for detecting respective outputs of upstream and downstream side air/fuel ratio sensors of the HC absorbent upon release of HC for detecting degradation of performance of the HC absorbent from a difference of detection.

On the other hand, since the technology disclosed in Japanese Patent Application Laid-Open No. Heisei 08-121232 requires two linear air/fuel ratio sensors, a problem is encountered in high production cost.

On the other hand, the detection method in the foregoing technology utilizes the fact that the downstream side air/fuel ratio is shifted to rich side in the extent of released HC when the upstream side air/fuel ratio is controlled to stoichiometric air/fuel ratio, and HC is discharged externally from the exhaust pipe without being purified. This depends on characteristics of the catalytic converter. Namely, in the catalytic converter, by oxidation reduction reaction between HC and CO serving as reducing agents and $NO_x$ as oxidizing agent, three components are purified efficiently. Accordingly, it is desirable in view of exhaust optimization to be stoichiometric air/fuel ratio in the condition where amounts of reducing agent and oxidizing agent in the catalytic converter is stoichiometrically balanced.

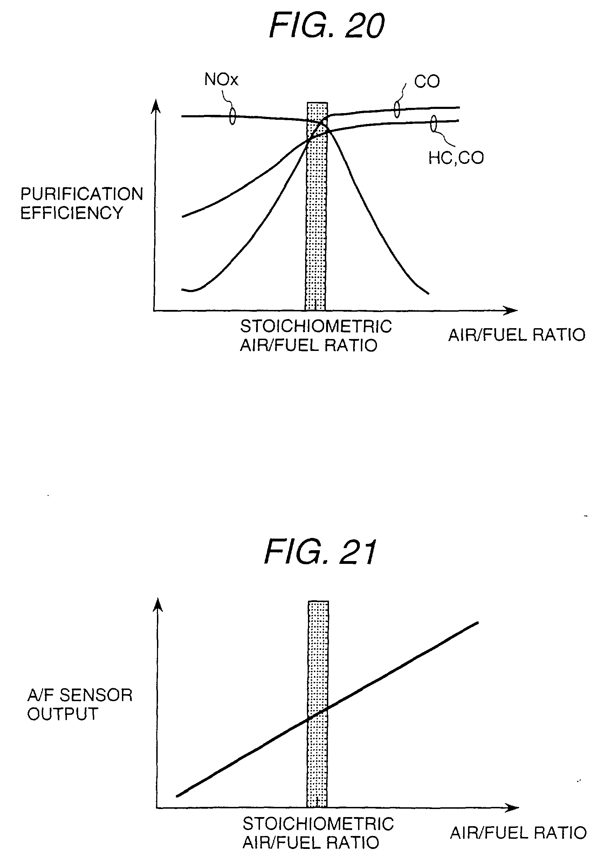

Fig. 20 shows purification performance of the catalytic converter for three components with respect to the air/fuel ratio. In general, by controlling air flow rate or fuel amount to be supplied to the engine, stoichiometric air/fuel ratio can be realized. When a ratio of the air and fuel to be charged into the engine during HC releasing period is controlled to the stoichiometric air/fuel ratio, reducing agent becomes excessive in the catalytic converter for the amount of HC released from the HC absorbent, namely in rich condition, to be a cause of deterioration of exhaust characteristics of HC and CO.

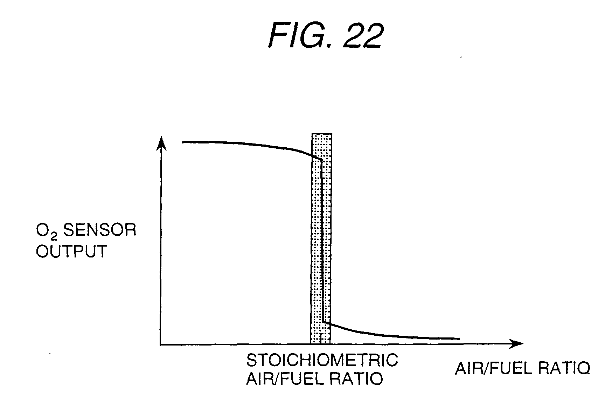

On the other hand, the technology disclosed in Japanese Patent Application Laid-Open No. Heisei 08-121232 proposes to provide air/fuel ratio sensors ($O_2$ sensor: output characteristics thereof is shown in Fig. 22) detecting rich or lean with respect to stoichiometric air/fuel ratio arranged upstream and downstream sides of the HC absorbent, in place of the linear air/fuel ratio (A/F sensor: output characteristics thereof is shown in Fig. 21) and provide means for calculating a correction amount correcting a feedback correction amount for correcting depending upon output of the upstream side air/fuel ratio sensor and a feedback correction amount depending upon the downstream side air/fuel ratio sensor, and means for calculating from the correction amount on the basis of the HC absorbing amount upon release of HC. In this means, in order to indirectly predict HC absorbing amount from the correction amount, it can be said that problem in precision is exist.

SUMMARY OF THE INVENTION

The present invention has been worked out in view of the problem. An object is to provide a diagnosis system for an engine which is low in production cost and can accurately diagnose absorption performance of a HC absorbent without degrading exhaust upon releasing of HC of the HC absorbent.

[Means for Solving the Problem]

In order to accomplish the above-mentioned object, a diagnosis system for an engine, according to the present invention, including an exhaust pipe, a hydrocarbon (HC) absorbent arranged within the exhaust pipe, an upstream air/fuel ratio sensor arranged upstream of the HC absorbent and detecting a wide range air/fuel ratio of an exhaust gas, a downstream air/fuel ratio sensor arranged downstream of the HC absorbent and detecting rich or lean with respect to stoichiometric air/fuel ratio of the exhaust gas, and a control unit, is characterized by

the control unit including means for correcting an air/fuel ratio upstream of the HC absorbent, means for correcting an air/fuel ratio downstream of the HC absorbent, and means for predicting a HC absorbing amount of the HC absorbent, the means for correcting the air/fuel ratio upstream of the HC absorbent correcting and controlling an output value of the upstream air/fuel ratio sensor toward lean, the means for predicting the HC absorbing amount of the HC absorbent predicting an absorbing performance of the HC absorbent on the basis of a difference between an output value of the upstream air/fuel ratio sensor and a predetermined value C during a period from a timing where a temperature of the HC absorbent becomes higher than or equal to a predetermined value A and the output value of the upstream air/fuel ratio sensor is corrected and controlled toward lean to a timing where the temperature becomes lower than or equal to a predetermined value B.

In the diagnosis system for the engine according to the present invention constructed as set forth above, the control unit corrects and controls the output value of the upstream air/fuel ratio sensor toward lean so that the output value of the downstream air/fuel ratio sensor becomes constant at stoichiometric air/fuel ratio. The means for predicting the HC absorbing amount of the HC absorbent derives the absorbing performance of the HC absorbent on the basis of the difference between the output of the upstream air/fuel ratio and the predetermined value C as stoichiometric air/fuel ratio when the temperature of the HC absorbent reaches the predetermined value A as the releasing temperature for releasing HC to permit diagnosis of the absorbing performance of the HC absorbent without degrading exhaust by controlling the air/fuel ratio downstream of the HC absorbent to stoichiometric air/fuel ratio

On the other hand, in particular embodiment of the diagnosis system for the engine according to the present invention, the means for predicting the HC absorbing amount of the HC absorbent predicts the absorbing performance of the HC absorbent from a value derived by integrating a value calculated by multiplying a difference between the output value of the downstream air/fuel ratio sensor and the predetermined value C by an inflow air amount of the engine, over a predetermined period.

Also, a diagnosis system for an engine, according to the present invention, including an exhaust pipe, a hydrocarbon (HC) absorbent arranged within the exhaust pipe, a downstream air/fuel ratio sensor arranged downstream of the HC absorbent and detecting a wide range air/fuel ratio of an exhaust gas or detecting rich or lean with respect to stoichiometric air/fuel ratio of the exhaust gas, and a control unit, is characterized by the control unit including means for correcting an air/fuel ratio downstream of the HC absorbent and means for predicting a HC absorbing amount of the HC absorbent, the means for correcting the air/fuel ratio downstream of the HC absorbent correcting and controlling a correction value of an air/fuel ratio control of a fuel amount or air amount to be supplied to a combustion chamber of the engine toward lean, and the means for predicting the HC absorbing amount of the HC absorbent predicting an absorbing performance of the HC absorbent on the basis of a difference between an output value of the upstream air/fuel ratio sensor and a predetermined value C during a period from a timing where a temperature of the HC absorbent becomes higher than or equal to a predetermined value A and the correction amount of the air/fuel ratio control is corrected and controlled toward lean to a timing where the temperature becomes lower than or equal to a predetermined value E.

Furthermore, in another particular embodiment of the diagnosis system for the engine according to the present invention, the means for correcting the air/fuel ratio upstream of the HC absorbent includes means for measuring or predicting temperature of the HC absorbent. The means for predicting the HC absorbing amount of the HC absorbent starts prediction of absorbing performance of the HC absorbent when rich condition of the output value of the downstream air/fuel ratio sensor is maintained for a predetermined period. At least a catalytic converter or a nitrogen oxide ($NO_x$) catalyst is provided on down stream of the HC absorbent. Also, the control unit comprises means for making judgment of fatigue of the HC absorbent on the basis of an output signal of the means for predicting the HC absorbing amount of the HC absorbent, and means for announcing fatigue of the HC absorbent on the basis of the output signal of the means for making judgment of fatigue of the HC absorbent.

BRIEF DESCRIPTION OF THE DRAWINGS

FIG. 1 is an illustration of an overall construction of an engine control system including the first embodiment of an exhaust system of the engine according to the present invention;
FIG. 2 is an illustration of an internal construction of a control unit of Fig. 1

FIG. 3 is a block diagram of a control system of a diagnosis system for an engine in the control unit of Fig. 1

FIG. 4 is a block diagram of a control system of HC absorbent upstream side air/fuel ratio correction means in the diagnosis system for engine of Fig. 3;

FIG. 5 is a flowchart of calculation of HC absorbent upstream side air/fuel ratio correction coefficient by the HC absorbent upstream side air/fuel ratio correction means of Fig. 4;

FIG. 6 is a block diagram of a control system of HC absorbent downstream side air/fuel ratio correction means in the diagnosis system for engine of Fig. 3;

FIG. 7 is a flowchart of flag calculation by the HC absorbent downstream side air/fuel ratio correction means of Fig. 4

FIG. 8 is a flowchart of calculation of HC absorbent upstream side air/fuel ratio correction coefficient by the HC absorbent upstream side air/fuel ratio correction means of Fig. 4;

FIG. 9 is a flowchart of HC absorbing amount calculation by a HC absorbing amount predicting means in the diagnosis system for the engine of Fig. 3;

FIG. 10 is a flowchart of HC absorbent fatigue judgment by the HC absorbent fatigue judgment means in the diagnosis system for the engine of Fig. 3;

FIG. 11 is an illustration showing overall construction of an engine control system having the second embodiment of exhaust system of the engine according to the present invention;

FIG. 12 is an illustration showing diagnosis performing range and performing condition of the diagnosis system of the engine of Figs. 1 and 11;

FIG. 13 is an illustration showing another diagnosis performing range and performing condition of the diagnosis system of the engine of Figs. 1 and 11;

FIG. 14 is an illustration showing overall construction of an engine control system having the third embodiment of exhaust system of the engine according to the present invention;

FIG. 15 is a block diagram of the control system of the diagnosis system for the engine in a control unit of Fig. 14

FIG. 16 is an illustration showing diagnosis performing range and performing condition of the diagnosis system of the engine of Fig. 14;

FIG. 17 is an illustration showing diagnosis performing range and performing condition of the diagnosis system of the engine of Fig. 14;

FIG. 18 is an illustration showing variation of activating temperature of a catalytic converter and HC amount passing through the catalytic converter;

FIG. 19 is a temperature characteristics chart of HC absorbent;

FIG. 20 is a characteristics chart of the catalytic converter;

FIG. 21 is an output characteristics chart of an A/F sensor;

FIG. 22 is an output characteristics chart of an $O_2$ sensor.

## DETAILED DESCRIPTION OF THE PREFERRED EMBODIMENTS

Hereinafter, the embodiment of an exhaust device of the engine according to the present invention will be discussed in detail with reference to the drawings.

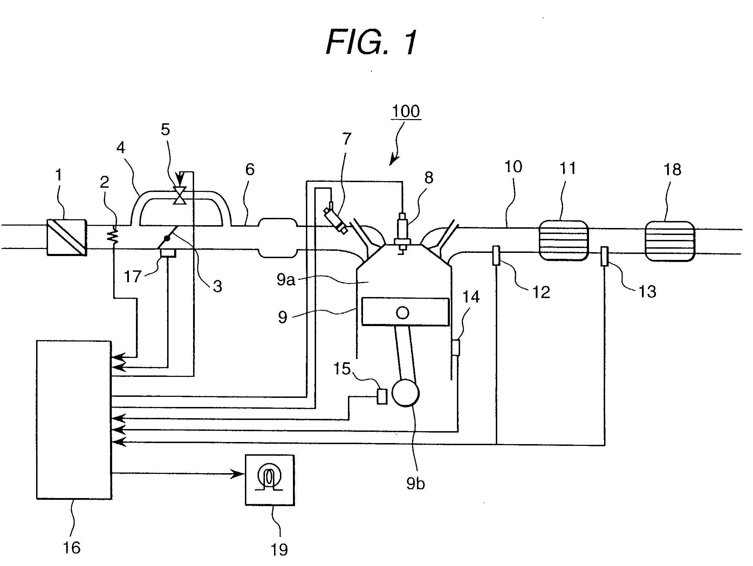

Fig. 1 shows an overall construction of an engine control system having the first embodiment of an exhaust device of the engine according to the present invention. An engine 100 is constructed with a plurality of cylinders 9. To each cylinder 9, each induction pipe 6 and an exhaust pipe 10 are connected.

In each cylinder 9, an ignition plug 8 is mounted. In the induction pipe 6, a fuel injection valve 7 is mounted. On the upstream of the duel injection valve 7, an air cleaner 1 and an air flow sensor 2 are mounted, and also a throttle valve 3 is arranged. Furthermore, an ISC bypass passage 4 bypassing the throttle valve 3 is provided. In the bypass passage 4. an ISC valve 5 is arranged.

On the other hand, in the exhaust pipe 10, a hydrocarbon (HC) absorbent 11 is arranged at an appropriate position. On the downstream side of the HC absorbent 11, a catalytic converter 18 is arranged. Furthermore, a throttle valve open degree sensor 17 is arranged in the arrangement position of the throttle valve 3, a coolant temperature sensor 14 is arranged on the side of the cylinder 8, a crank angle sensor 15 is arranged on a crankshaft portion 9b, an A/F sensor 12 as an upstream side air/fuel ratio sensor is arranged on upstream side of the HC absorbent 11, and an $O_2$ sensor 13 as a downstream side air/fuel ratio sensor is arranged between the HC absorbent 11 and the catalytic converter 18.

In the engine 100, a control device (control unit) 16 is arranged. The control unit 16 receives input of signals of respective sensors, and outputs a control signals to respective operating devices through arithmetic process.

Air from outside of the engine 100 passes through an air cleaner 1 and flows into a combustion chamber 9a via the induction pipe 6. An intake air flow rate is mainly adjusted by the throttle valve 3, but is adjusted by the ISC valve 5 provided in the bypass passage 4 for controlling an engine revolution speed by the adjustment. On the other hand, by the air flow sensor 2, the intake air flow rate is detected. By the crank angle sensor 15, a signal is output per 1° of angular displacement of the crankshaft 9b. By the coolant temperature sensor 14, a coolant temperature of the engine is detected.

Respective signals of the air flow sensor 2, the throttle open degree sensor 17 mounted in a portion of the throttle valve 3, the crank angle sensor 15, and the coolant temperature sensor 14 are fed to the control unit 16. From outputs of these sensors, operating condition of the engine 100 is obtained for optimally calculating a primary operating amount, such as the basic injection amount of fuel and spark ignition timing. The fuel injection amount calculated by the control unit 16 is converted into a valve opening pulse signal to be set to a fuel injection valve 7.

On the other hand, in the control unit 16, the spark ignition timing is calculated to output a drive signal from the control unit 16 to the ignition plug 8 for ignition at the spark ignition timing. The fuel injected from the fuel injection valve 7 is mixed with the air introduced from the induction pipe 6 to flow into the combustion chambers 9a of respective cylinders to form a mixture. The mixture is ignited and burnt by spark ignition by the ignition plug 8. An energy generated at this time becomes a source of power as revolving driving force of the engine 100.

The exhaust gas after combustion in the combustion chamber 9a is fed into the HC absorbent 11 via the exhaust pipe 10. The HC absorbent 11 absorbs HC under cold condition of the engine 100 and releases HC at the temperature high than or equal to the predetermined temperature. The exhaust gas discharged from the HC absorbent 11 is purified respective exhaust component of HC, CO and $NO_x$ by the catalytic converter 18.

The A/F sensor 12 is mounted on upstream of the HC absorbent 11 and has a linear output characteristics with respect to oxygen concentration contained in the exhaust gas. A relationship between the oxygen concentration in the exhaust gas and the air/fuel ratio is substantially linear as set forth above. Thus, the air/fuel ratio on upstream of the HC absorbent 11 can be obtained by the A/F sensor 12. On the other hand, on downstream side of the HC absorbent 11, the $O_2$ sensor 13 is mounted and has a characteristics to output two signals as set forth above and can detect air/fuel ratio downstream of the HC absorbent 11.

The control unit 16 derives the air/fuel ratio of upstream of the HC absorbent 11 from the signal of the A/F sensor 12 and performs feedback (F/B) control sequentially correcting the basic injection amount so that the air/fuel ratio of the mixture in the combustion chamber 9a becomes a target air/fuel ratio. However, as will be discussed later, so that the output of the $O_2$ sensor on downstream of the HC absorbent 11 becomes constant upon release of HC, the air/fuel ratio on upstream of the HC absorbent 11 is controlled. On the other hand, when judgment is made that fatigue is caused in the HC absorbent 11 on the basis of a predicted value of the HC absorbing amount indicative of the HC absorbing performance, a fatigue announcing lamp 19 as one of fatigue announcing means of the HC absorbent 11, is turned ON.

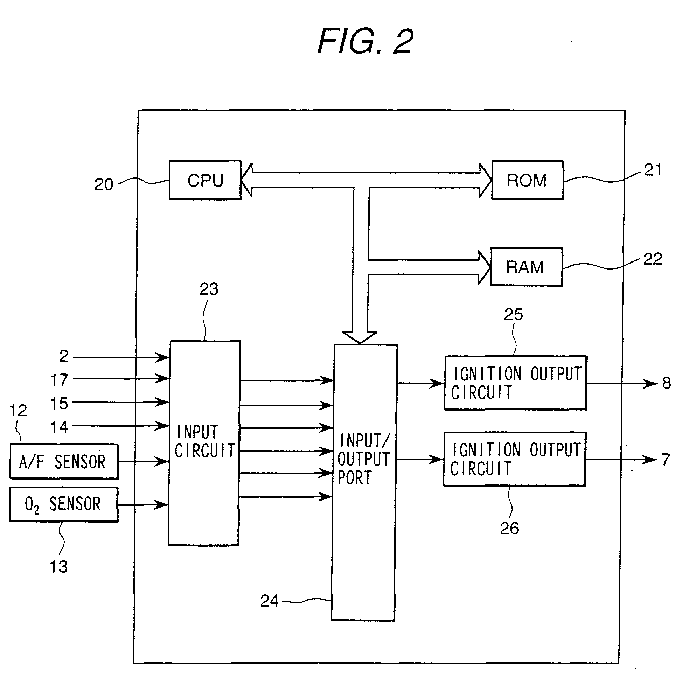

Fig. 2 shows the inside of the control unit 16.

In the control unit (ECU) 16, output values of the A/F sensor 12, the $O_2$ sensor 13, the throttle open degree sensor 17, the air flow sensor 2, the crank angle sensor and coolant temperature sensor 14 are input. After signal processing , such as noise elimination or so forth, by the input circuit 23, and then fed to an input/output port 24. The value of the input/output port 24 is stored in RAM 22 and is arithmetically processed by CPU 20. A control program describing the content of arithmetic process is preliminarily written in ROM 21.

A value indicative of each actuator operation amount calculated according to the control program is stored in RAM 22, and then fed to the input/output port 24. Then, as an actuation signal of the ignition plug 8, an ON/OFF signal which is turned ON upon power supply for a primary winding in an ignition output circuit 25 and OFF while power is not supplied. The signal for the ignition plug 8 set in the input/output port 24 is amplified by the ignition output circuit 25 into sufficient energy required for combustion, and is supplied to the ignition plug 8. On the other hand, as the drive signal of the fuel injection valve 7, an ON/OFF signal which is turned ON upon valve opening and is turned OFF upon valve closing, is set, and is amplified by a fuel injection valve drive circuit 26 into a sufficient energy for opening the fuel injection valve 7 to be fed to the fuel injection valve 7.

Next, discussion will be given for content of control in the shown embodiment as written in ROM 21.

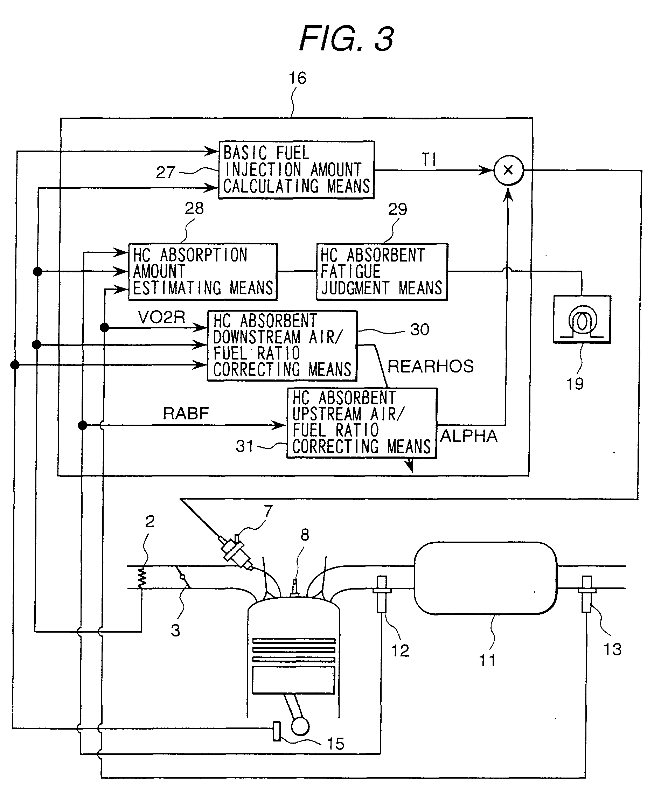

Fig. 3 is a control block diagram of an embodiment of the diagnosis system of the engine in the ECU 16.

In a basic fuel injection amount calculating means 27, from respective output values of the air flow sensor 2 and the crank angle sensor 15, the basic fuel injection amount per one cylinder as shown by the following equation (1) is calculated in feed forward (F/F) manner, for example.

$$Ti = K \ (QA/(N \times CYL)) \qquad (1)$$

wherein

Ti: basic fuel injection amount,
K: fuel injection amount adjusting coefficient,
QA: air flow rate
N: revolution speed;
CYL: number of cylinders

The fuel injection amount adjusting coefficient K is provided in consideration of characteristics and so forth of the fuel injection valve 7 for establishing the basic fuel injection amount Ti realizing stoichiometric air/fuel ratio. In addition, on the basis of the signal of the A/F sensor 12 mounted on the upstream side of the HC absorbent 11 adapting to various operating condition, environment variation, aging, a HC absorbent upstream side air/fuel ratio correction means 31 of performs correction of the air/fuel ratio on upstream side of the HC absorbent 11.

Furthermore, in a HC absorbent downstream side air/fuel ratio correction means 30 , on the basis of the signal of the $O_2$ sensor 13 mounted on the downstream side of the HC absorbent 11 upon releasing of HC, air/fuel ratio correction on the downstream side of the HC absorbent 11 is performed. Detailed content of the air/fuel ratio control of upstream side of the HC absorbent 11 and the air/fuel ratio control of downstream side of the HC absorbent 11 will be discussed as follow:

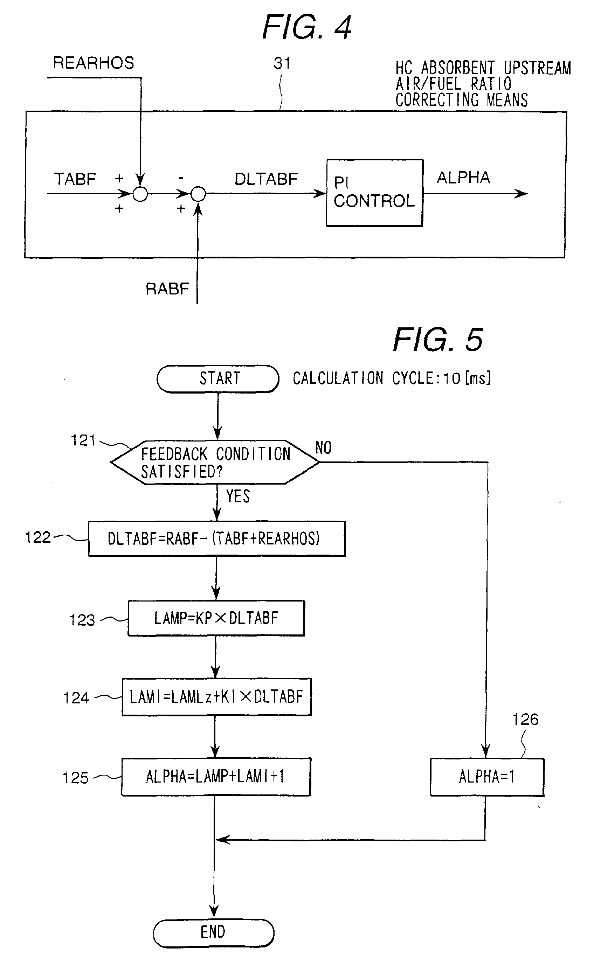

At first, concerning content of arithmetic operation of the HC absorbent upstream side air/fuel ratio correction coefficient ALPHA by the HC absorbent upstream side air/fuel ratio correction means 31 will be discussed with reference to Figs. 4 and 5.

As shown in Fig. 4, the control is for F/B control in on-line for establishing the upstream side air/fuel ratio of the HC absorbent 11 to the target air/fuel ratio (TABF+REARHOS) on the basis of an output RABF of the A/F sensor 12 mounted on upstream side of the HC absorbent 11 and a HC absorbent downstream side air/fuel ratio control correction coefficient REARHOS which will be discussed later. Here, TABF is target basis air/fuel ratio.

Fig. 5 is a flowchart of particular arithmetic operation of the HC absorbent upstream side air/fuel ratio correction coefficient ALPHA.

At first, at step 121 judgment is made whether permitting condition of the F/B control is established or not. As the permitting condition, whether the coolant temperature is higher than or equal to a given value, if not accelerating state, if the sensor is activated and so forth may be considered. Then, when the permitting condition of the F/B control is not established, process is advanced to step 126 to go to end without performing correction with setting the HC absorbent upstream side air/fuel ratio correction coefficient ALPHA.

When judgment is made that F/B control permitting condition is established at step 121, namely when YES, PI control is performed on the basis of calculated value DLTABF from the output of the A/F sensor 12 to calculate the correction coefficient ALPHA at steps 122 to 125.

At first, at step 122, a difference DLTABF of the HC absorbent upstream side air/fuel ratio RABF and the target air/fuel ratio (TABF+REARHOS) is calculated. At step 123, a proportional correction term KAMP is calculated by multiplying a proportional gain KP to the difference DLTABF. Next, at step 124, a sum of a value derived by multiplying an integration gain KI of the difference DLTABF and the integration correction term $LAMI_z$ calculated in the preceding job as integration correction term LAMI.

At step 125, a value derived by adding 1 as center value to a proportional component LAMP and an integral component LAMI is set as the HC absorbent upstream side air/fuel ratio correction coefficient ALPHA as a F/B control correction term to terminate sequence of operation.

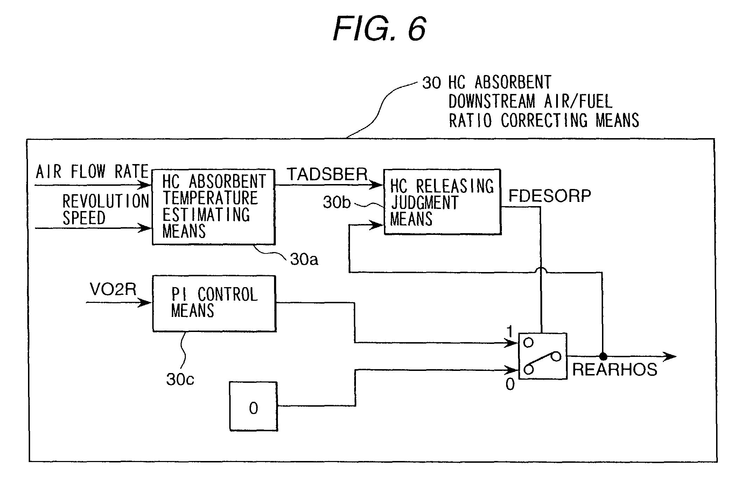

Next, concerning content of arithmetic operation of the HC absorbent downstream side air/fuel ratio correction coefficient REARHOS by the HC absorbent downstream side air/fuel ratio correction means 30 will be discussed with reference to Figs. 6 to 8.

As shown in Fig. 6, in the HC absorbent downstream side air/fuel ratio correction means 30, a HC absorbent temperature predicting means 30a predicts a temperature TADSBER of the HC absorbent 11 from various operation parameters of air flow sensor 2, the crank angle sensor 15 and so forth for setting HC releasing state indicative flag FDESORP is set to 1 by a HC releasing judgment means 30b when a HC absorbent temperature TADSBER becomes higher than or equal to a HC releasing temperature. Subsequently, when the HC releasing judgment means 30b detects end of releasing of HC on the basis of the value of the HC absorbent downstream side air/fuel ratio correction coefficient REARHOS, the flag FDESORP is reset to 0. It should be noted that the detail of the content of calculation of the flag FEDSORP will be discussed later.

On the basis of the output value of the downstream side air/fuel ratio sensor 13, in a PI control means 30c as calculating means for fuel amount to be supplied to the combustion chamber 9a of the engine, from the output value of the downstream side air/fuel ratio sensor 13, when the flag FDESORP is 1, the HC absorbent downstream side air/fuel ratio correction coefficient REARHOS is calculated through a calculation method discussed later on the basis of an output VO2R of the $O_2$ sensor on downstream of the HC absorbent 11.

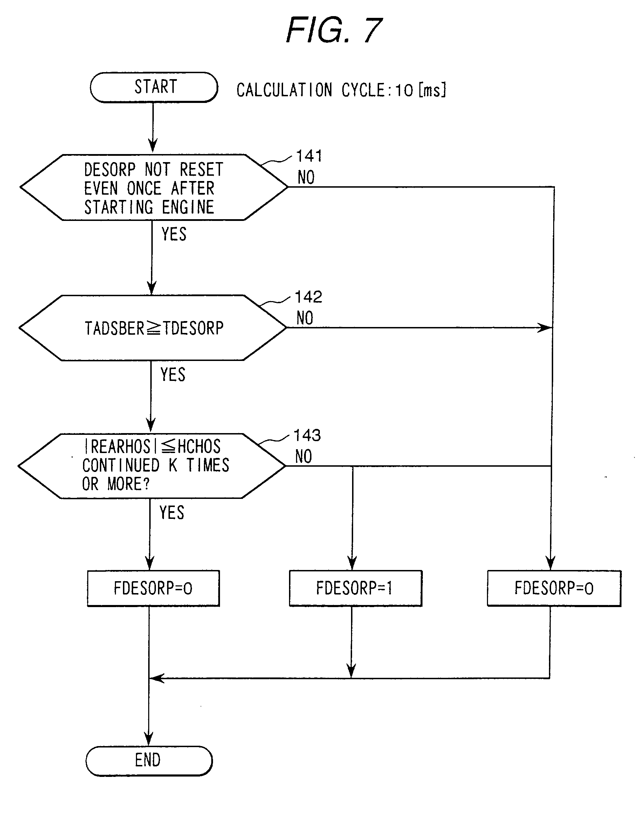

Fig. 7 is a flowchart of arithmetic operation of the HC releasing state indicative flag FDESORP.

At step 141, judgment is made where HC releasing is completed or not. Particularly, starting up of the engine, judgment is made whether the flag FDESORP has not yet been reset from 1 to 0 even once or not. If not reset, namely answer is YES, the process is advanced to step 142. On the other hand, if NO, the flag FDESORP is reset to o and then the sequence operation goes end.

At step 142, judgment is made whether the temperature of the HC absorbent is reached a releasing temperature or not. Particularly, judgment is made whether the HC absorbent temperature TADSBER becomes higher than or equal to a HC release start temperature TDESORP or not. It should be noted that the HC absorbent temperature TADSBER is a value to be predicted on the basis of a physical model from various operation parameters. Since there are several proposals in connection with detail of the model, detailed discussion will be omitted here. On the other hand, it is also possible to perform actual measurement by mounting a temperature sensor on downstream side of the HC absorbent 11. The HC release start temperature TDESORP is preliminarily determined at a value determined from a specification of the HC absorbent 11.

Then, when the HC absorbent temperature TADSBER is higher than or equal to the HC release start temperature TDESORP, namely YES, the process is advanced to step 143. On the other hand, if NO, the flag FDESORP is set 0, the sequence of operation goes end.

At step 143, judgment is made whether HC releasing is completed or not. Particularly, the value of the HC absorbent downstream side air/fuel ratio correction coefficient REARHOS is used. As will be discussed later, during releasing of HC, the air/fuel ratio is controlled to be lean on the upstream side of the HC absorbent 11 in order to make the air/fuel ratio on down stream of the HC absorbent 11 to be stoichiometric air/fuel ratio, the value of the HC absorbent downstream side air/fuel ratio correction REARHOS becomes smaller. Accordingly, at step 143, judgment is made whether the HC absorbent downstream side air/fuel ratio correction coefficient REARHOS becomes sufficiently small and this condition is maintained for a given period or not.

Then, if the value of the HC absorbent downstream side air/fuel ratio correction coefficient REARHOS is sufficiently small and this condition is maintained for a predetermined period, namely answer at step 143 is YES, judgment is made that HC releasing is completed to reset the flag FDESORP to 0 to terminate the sequence of operation. On the other hand, if the answer is NO, judgment is made that HC releasing is on going to set the flag FDESORP to 1 to terminate the sequence of operation. It should be noted that the initial value of the HC releasing start temperature FDESORP is set to 0.

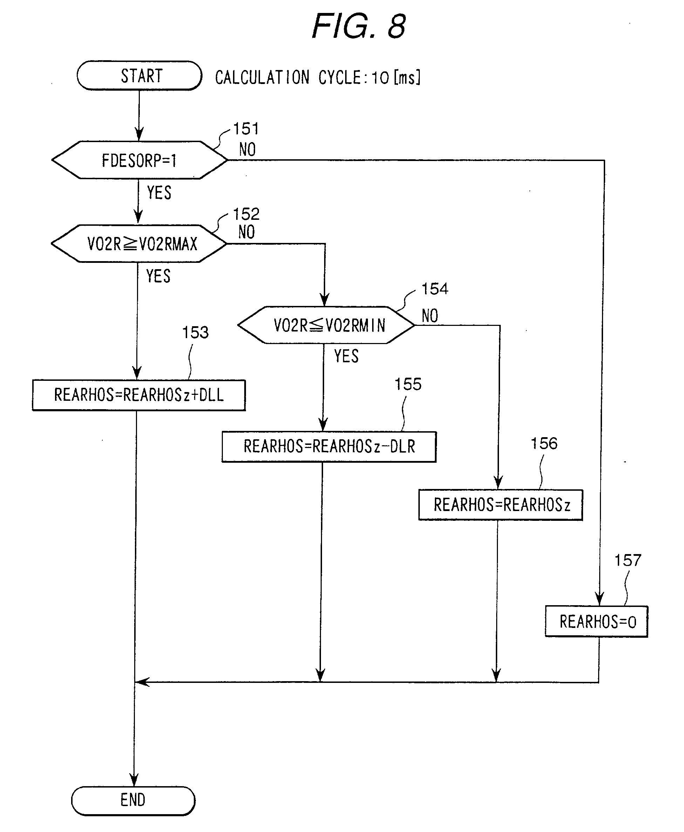

Fig. 8 is a flowchart of arithmetic operation of the HC absorbent downstream side air/fuel ratio correction coefficient (correction term) REARHOS.

The HC absorbent downstream side air/fuel ratio correction coefficient REARHOS of the HC absorbent 11 is for correction of the upstream side target air/fuel ratio TABF of the HC absorbent 11 so that the output value of the $O_2$ sensor downstream of the HC absorbent 11 falls within a predetermined value.

At first, at step 151, judgment is made whether HC is releasing or not. Particularly, judgment is made whether the flag FDESORP is 1 or not. When the flag FDESORP is 1, namely YES, the process is advanced to step 152. On the other hand, if NO, the process is advanced to step 157 to set the HC absorbent downstream side air/fuel ratio correction coefficient REARHOS to 0 to terminate the process without performing correction.

At step 152, judgment is made whether the air/fuel ratio on downstream of the HC absorbent 11 is rich due to release of HC. Particularly, judgment is made whether the output VO2R of the $O_2$ sensor 13 is greater than or equal to a HC absorbent downstream side air/fuel ratio control permitting value (rich side) VO2RMAX or not. If the output is greater than or equal to the HC absorbent downstream side air/fuel ratio control permitting value VO2RMAX, namely YES, judgment is made that air/fuel ratio on downstream of the HC absorbent 11 is rich to advance the process to step 153.

On the other hand, when the output is not greater than or equal to the HC absorbent downstream side air/fuel ratio control permitting value VO2RMAX at step 152, the process is advance to step 154 to check whether the output of the $O_2$ sensor 13 is less than or equal to a HC absorbent downstream side air/fuel ratio control permitting value (lean side) VO2RMIN or not, namely YES, judgment is made that the air/fuel ratio on downstream of the HC absorbent 11 is lean and then the process is advanced to step 155 to subtract a variation rate DLL of the HC absorbent downstream side air/fuel ratio correction coefficient REARHOS from the correction coefficient REARHOS calculated in the preceding job to set as the HC absorbent downstream side air/fuel ratio correction REARHOS for making the air/fuel ratio upstream of the HC absorbent 11 rich. Then, a sequence of operation goes end. This is the process to return toward the stoichiometric air/fuel ratio as excessively corrected toward lean.

On the other hand, when the output of the $O_2$ sensor is not less than or equal to the HC absorbent downstream side air/fuel ratio control permitting value VO2RMIN as checked at step 154, the process is advanced to step 156 to make judgment that the air/fuel ratio downstream of the HC absorbent 11 falls within the predetermined range, namely close to the stoichiometric air/fuel ratio to terminate sequence of operation without updating with judgment that the downstream side air/fuel ratio control correction coefficient REARHOS and the downstream side air/fuel ratio control correction coefficient REARHOS calculated in the preceding job are equal. It should be noted that the initial value of the downstream side air/fuel ratio correction coefficient REARHOS is 0.

Next, prediction of HC amount absorbed by the HC absorbent 11 and fatigue judgment of the HC absorbent 11 will be discussed with reference to Figs, 9 and 10.

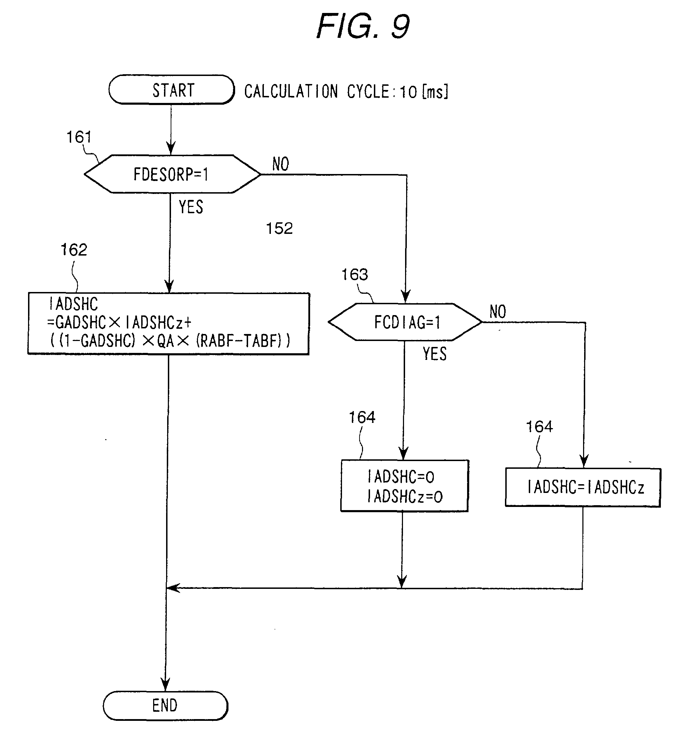

Concerning prediction of the HC amount absorbed by the HC absorbent 11, since the lean shift amount of the air/fuel ratio upstream of the HC absorbent caused during releasing of HC is correlated to the HC absorbing amount as set forth above, as shown in the flowchart of Fig. 9, prediction is performed by calculation of the HC absorbing amount.

At first, at step 161, judgment is made whether HC is releasing or not. When the flag FDESORP is 1, namely YES, the process is advanced to step 162 for summing integration of a value derived by multiplying air flow rate QA to lean shifting amount from stoichiometric air/fuel ratio on the basis of the upstream air/fuel ratio RABF and the target basic air/fuel ratio TABF to derive a HC absorbing capacity IADSHC as indicia of HC accumulated absorbing amount to terminate operation.

On the other hand, at step 161, when the flag FDESORP is not 1, the process is advanced to step 163 to make judgment whether fatigue judgment is completed or not. Particularly, judgment is made whether fatigue judgment completion flag FCDIAG is 1 or not. It should be noted that, upon starting up of the engine, the initial value of the fatigue judgment completion flag FCDAG is set to 0. Set condition is discussed later.

Then, when the fatigue judgment completion flag FCDIAG is 1 as checked at step 163, namely YES, the process is advanced to step 164 to set both of the HC absorbing capacity IADSHC and the HC absorbing capacity calculated in the preceding job to 0 to terminate operation. On the other hand, when the fatigue judgment completion flag FCDIAG is not 1, the process is advanced to step 165 to make judgment that fatigue judgment is not yet performed to maintain the preceding value with judgment that the HC absorbing capacity and the HC absorbing capacity calculated in the preceding job are equal, to terminate the sequence of operation.

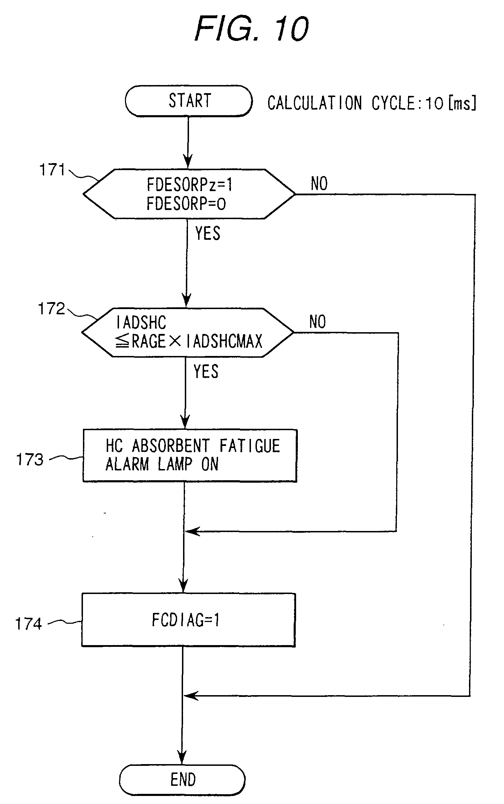

On the other hand, Fig. 10 is a flowchart of fatigue judgment of the HC absorbent.

At step 171, judgment is made whether HC releasing is completed or not. Particularly, judgment is made whether the HC releasing state indicative flag FDESORP is 0 and the HC releasing start indicative flag FDESORP$_Z$ as calculated in the preceding job is 1 or not. If these conditions are satisfied, namely when YES, judgment is made that HC releasing is completed to advance the process to step 172. On the other hand, when these conditions are not satisfied, the process goes end.

At step 172, fatigue judgment of the HC absorbent 11 is performed. Particularly, judgment is made that the HC absorbing capacity IADSHC is less than or equal to a value derived by multiplying a threshold value RAGE of the fatigue judgment preliminarily determined within 0 to 1.0 with respect to the HC absorbing capacity in brand new state and the HC absorbing capacity IADSHCMAX of the HC absorbent in brand new state which is preliminarily and empirically determined, or not. When this condition is satisfied, namely YES, judgment is made that fatigue of the HC absorbent 11 is caused to advance the process to step 173 to turn ON the fatigue announcing lamp 19 mounted around the driver's seat or the like. Process is then advanced to step 174 to set the fatigue judgment completion flag FCDIAG to 1 and process goes end. On the other hand, when the condition is not satisfied as checked at step 172, judgment is made that the HC absorbent 11 is not yet fatigued to advance the process to step 174 to terminate the process.

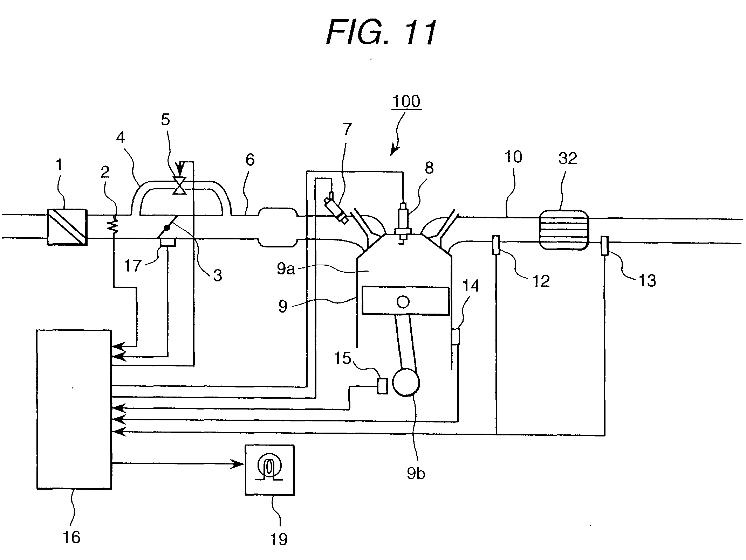

Fig. 11 shows the overall construction of an engine control system having the second embodiment of the diagnosis system for the engine according to the present invention.

While the foregoing first embodiment is directed to the control system for the engine where the catalytic converter 18 is arranged on downstream of the HC absorbent 11, a catalyst 32 of the shown embodiment is formed by supporting the HC absorbent and catalytic converter on the same catalyst support.

Namely, the shown embodiment of the engine control system shown in Fig. 11 has the basic construction the same as that first embodiment of the engine control system of Fig. 1 but is differentiated from the construction, in which the HC absorbent 11 and the catalytic converter 18 are provided on the exhaust pipe 10 in the first embodiment only at the point where one catalyst 28 provided in the exhaust pipe 10 is constructed by supporting the HC absorbent and the catalytic converter on the same catalyst support. Even for the constriction of the shown embodiment, ECU 16 in the foregoing first embodiment is applicable.

As set forth above, the foregoing embodiment of the present invention achieves the following function by the construction set forth above.

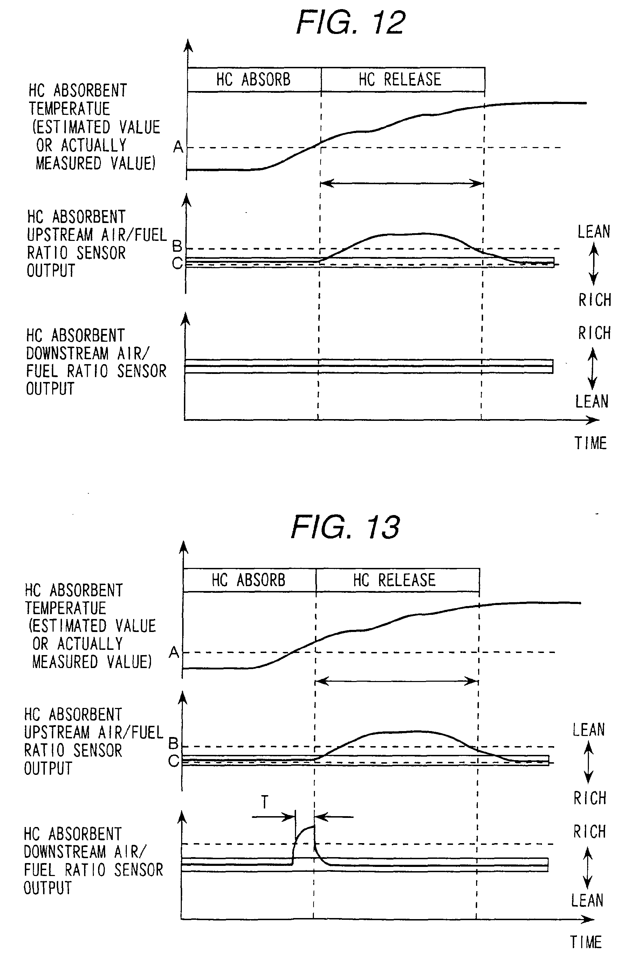

The first embodiment of the diagnosis system for the engine is the diagnosis system of the HC absorbent 11 of the engine 100, which has the HC absorbent 11 and the catalytic converter 18 mounted on the exhaust pipe 10, the A/F sensor 12 detecting the air/fuel ratio of wide range on the upstream of the HC absorbent 11 and the O$_2$ sensor 13 detecting rich or lean with respect to stoichiometric air/fuel ratio on downstream side of the HC absorbent 11, and has HC absorbent downstream side air/fuel ratio correction means 30 for correcting the air/fuel ratio downstream of the HC absorbent 11 on the basis of the output signal of the O$_2$ sensor 13 and the HC absorbent upstream side air/fuel ratio correction means 31 for correcting the air/fuel ratio upstream of the HC absorbent 11 on the basis of the output signal of the A/F sensor 12. As shown in Fig. 12, when a predicted temperature of the HC absorbent 11 is higher than or equal to the releasing temperature A for releasing HC, a fuel amount to be supplied to the engine is controlled so that the output of the O$_2$ sensor 13 becomes a value corresponding to the stoichiometric air/fuel ratio to make the output of the A/F sensor 13 as the air/fuel ratio upstream of the HC absorbent 11 lean to maintain the output of the O$_2$ sensor 13 at the value corresponding to stoichiometric air/fuel ratio to prevent deterioration of exhaust. It should be noted that the HC releasing period can be recognized as the period until the output of the A/F sensor 13 becomes less than or equal to the predetermined value B.

Then, the diagnosis system of the engine set forth above includes HC absorbing amount predicting means 28 for predicting the HC absorbing amount of the HC absorbent 11 from the output signals of the O$_2$ sensor 13 and the A/F sensor 12, HC absorbent fatigue judgment means 29 for making judgment of fatigue of the HC absorbent 11 from the output signal of the HC absorbing amount predicting means 28, and the fatigue announcing lamp 19 for announcing fatigue of the HC absorbent 11 to the driver on the basis of the output signal of the HC absorbent fatigue judgment means 29. The HC absorbent predicting means 28 derives the absorbing performance of the HC absorbent 11 on the basis of a difference between the output of the A/F sensor 12 and the stoichiometric air/fuel ratio C. The amount for shifting the air/fuel ratio upstream of the HC absorbent 11 toward lean side is proportional to oxygen amount necessary for oxidizing HC released from the HC absorbent 11 at that time for capability of prediction of the HC absorbing amount of the HC absorbent 11 from the lean shifting amount. Accordingly, the shown embodiment of the diagnosis system of the engine diagnose absorbing performance of the HC absorbent 11 without causing deteriorate exhaust by controlling air/fuel ratio at the inlet of the catalytic converter 18 to stoichiometric air/fuel ratio to announce to the driver when the fatigue of the HC absorbent 11 is judged and can adapt to restriction under law and regulation.

On the other hand, concerning diagnosis performing condition and performing condition of the diagnosis system 100 for the engine, as shown in Fig. 13, it is possible to add a condition that the output of the $O_2$ sensor mounted on downstream of the HC absorbent 11 by adjusting the output of the A/F sensor 12 mounted on upstream side of the HC absorbent 11 to stoichiometric air/fuel ratio, is maintained in richer condition for a predetermined period T, in addition to a temperature condition of the HC absorbent 11, for making start of releasing of HC clear to enhance accuracy of detection of HC releasing from the HC absorbent 11.

Furthermore, the second embodiment of the diagnosis system 100 of the engine is differentiated from the construction where the HC absorbent 11 and the catalytic converter 18 are provided in the exhaust pipe 10 as in the first embodiment at the point where one catalyst 32 installed in the exhaust pipe 10 supports the HC absorbent and the catalytic converter on the same catalyst support. In this case, the air/fuel ratio at the outlet of the catalyst 32 is controlled instead of the air/fuel ratio at the inlet of the catalyst 32. The first embodiment of ECU 16 is applicable to achieve the same effect.

As set forth above, while the present invention has been discussed in detail in terms of two embodiments, the present invention is not limited to the foregoing embodiments and various modification in designing is possible without departing from the principle of the present invention as set forth in claims.

For example, in the foregoing embodiment, a construction is taken to control the air/fuel ration by air/fuel ratio, it is possible to control air flow rate. On the other hand, the oxygen amount necessary for oxidizing released HC is correlated not only for the air/fuel ratio and air flow rate supplied to the engine. Therefore, HC releasing amount is derived from an integrated value in the releasing period in the value derived by multiplying the lean shifting amount and the air flow rate to improve precision in deriving the HC releasing amount. Furthermore, the HC absorbent temperature predicting means 30a predicts a temperature TADSBER of the HC absorbent 11 from various operation parameters, such as the air flow sensor 2, the crank angle sensor 15 and so forth.

When the sensor for measuring the temperature of the HC absorbent 11 is provided, it serves as HC absorbent temperature measuring means.

On the other hand, in the first embodiment, catalytic converter 18 is provided on downstream of the HC absorbent 11. However, it is also possible to provide $NO_x$ catalyst in place of the catalytic converter 18. Even in this case, similar effect to the first embodiment can be obtained.

Furthermore, the first embodiment has the A/F sensor 12 on upstream of the HC absorbent 11 and $O_2$ sensor 13 on downstream thereof. However, it is possible to provide either of A/F sensor or $O_2$ sensor on downstream of the HC absorbent 11. Even in this case, as will be discussed later, absorbing performance of the HC absorbent 11 can be derived.

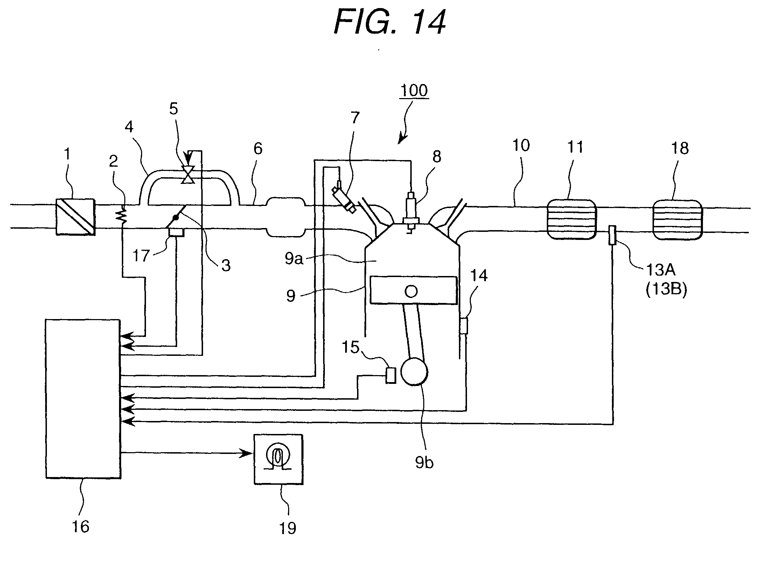

Fig. 14 shows the overall construction of the engine control system having the third embodiment of the diagnosis system 100 of the engine. The shown embodiment of the engine control system has the same construction in the basic construction as the first embodiment of the engine control system of Fig. 1. To the point that the air/fuel ratio sensor is provided on downstream of the HC absorbent 11, different from the first embodiment, the air/fuel ratio is controlled on the basis of the output of the air/fuel ratio sensor.

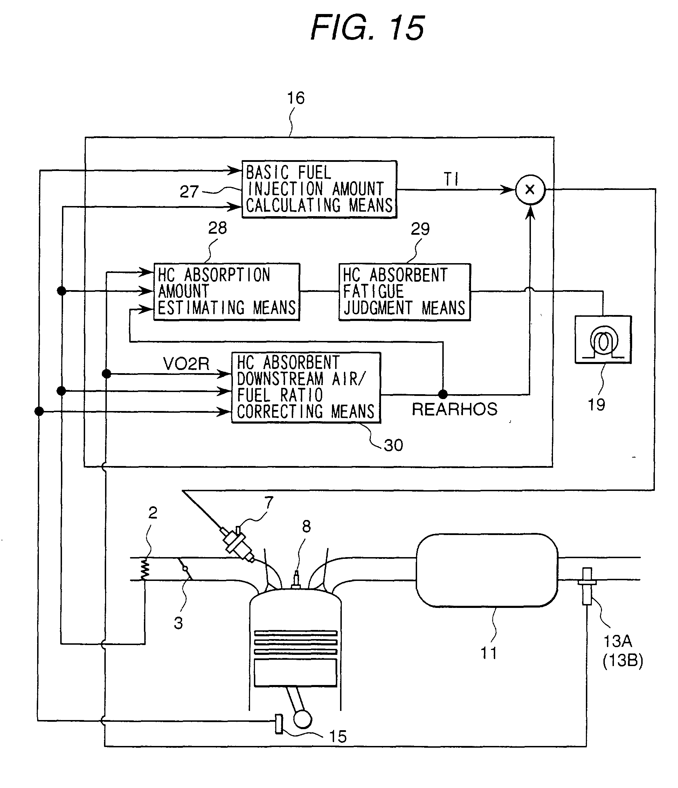

Fig. 15 is a block diagram of the control system of the diagnosis system of the engine. The diagnosis system of the engine performs prediction of the HC releasing amount upon releasing of HC on the basis of control amount in air/fuel ratio control, and includes HC absorbent downstream side air/fuel ratio correction means 30 for correcting the air/fuel ratio downstream of the HC absorbent 11 on the basis of the output signal of the air/fuel ratio sensor (A/F sensor 13A or $O_2$ sensor 13B) provided on downstream of the HC absorbent 11, the HC absorbing amount predicting means 28 for predicting the HC absorbing amount of the HC absorbent 11 from the output signal of the air/fuel ratio sensor 13A (or 13B), the HC absorbent fatigue judgment means 29 for making judgment of fatigue of the HC absorbent 11 from the output signal of the HC absorbing amount predicting means 28, and the fatigue announcing lamp 19 announcing fatigue of HC absorbent 11 on the basis of the output signal of the HC absorbent fatigue judgment means 29.

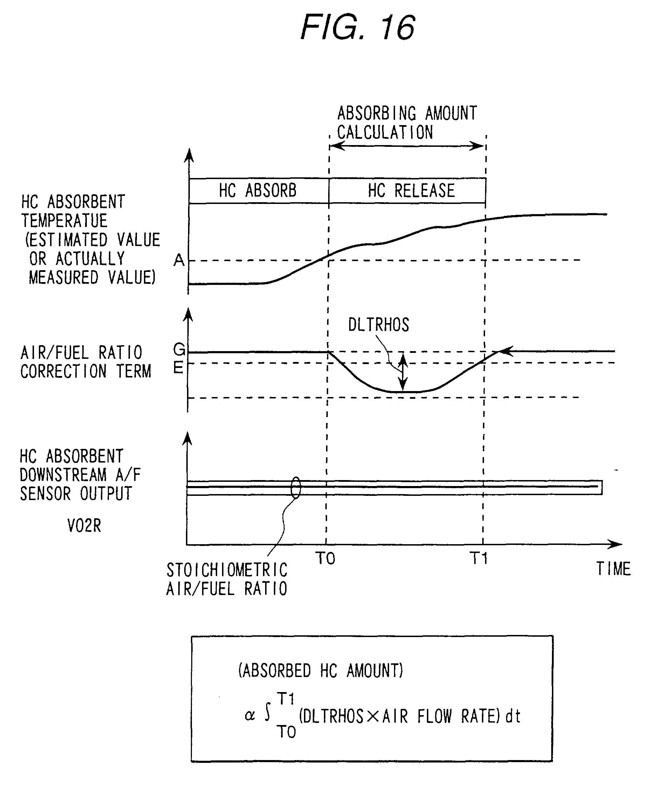

Fig. 16 shows diagnosis performing range and performing condition of the diagnosis system for the engine when the air/fuel ratio sensor is the A/F sensor 13A detecting the air/fuel ratio in wide range. When the measured temperature or the predicted temperature of the HC absorbent 11 becomes higher than or equal to the releasing temperature A for releasing HC, the air amount or fuel amount to be supplied to the engine 100 is controlled to make air/fuel ratio correction term REARHOS lean to maintain the output of the air/fuel ratio sensor 13A at a value corresponding to stoichiometric air/fuel ratio to prevent deterioration of exhaust.

Then, the HC absorbing amount predicting means 28 derives a difference DLTRHOS between the air/fuel ratio correction term REARHOS and the fuel injection amount G corresponding to stoichiometric value in each operational range for integrating a value derived by multiplying the difference DLTRHOS with the air amount with respect to the absorbing amount calculation period (T0 to T1) to derive HC absorbing performance of the HC absorbent 11. On the basis of the result thereof, the HC absorbent 11 fatigue judgment means 29 diagnose absorbing performance of the HC absorbent 11 to announce to the driver by the fatigue announcing lamp 19 when fatigue is judged.

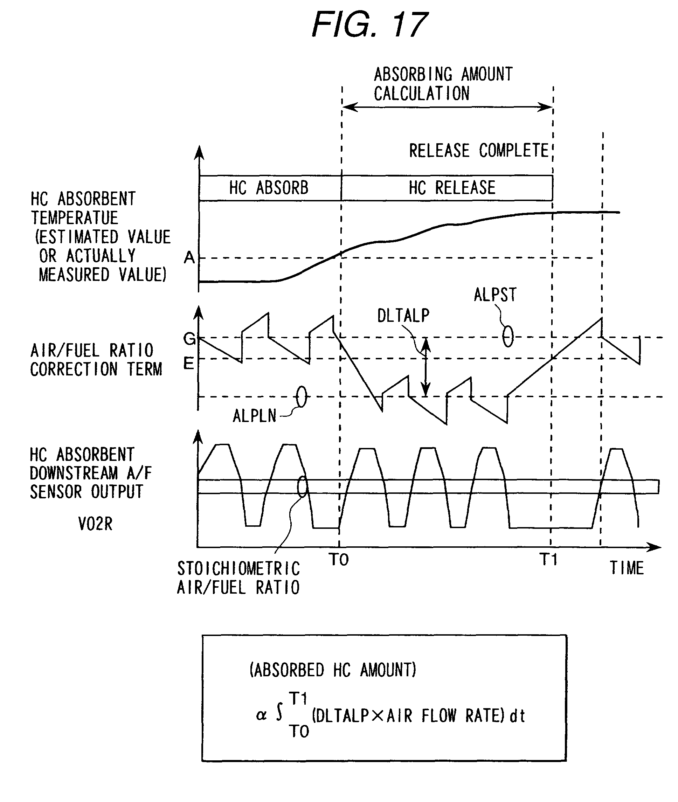

Fig. 17 shows the diagnosis performing range and performing condition of the diagnosis system for the engine in the case where the air/fuel ratio sensor is the $O_2$ sensor detecting rich or lean with respect to the stoichiometric air/fuel ratio. Even in this case, the air amount or fuel amount is controlled so that the output of the air/fuel ratio sensor 13B becomes a value corresponding to the stoichiometric air/fuel ratio to make the air/fuel ratio correction term REARHOS by releasing of HC lean and whereby to maintain the output of the air/fuel ratio sensor 13B at the value corresponding to the stoichiometric air/fuel ratio to prevent deterioration of exhaust. Then, the HC absorbing amount predicting means 28 derives a difference DLTALP of a center value ALPST of the air/fuel ratio correction term REARHOS upon non releasing state of HC and a center value ALPLN of the air/fuel ratio correction term REARHOS upon releasing state of HC to integrate a value derived by multiplying the difference DLTAP and the air amount with respect to absorbing amount calculation period (T0 to T1), and to derive the HC absorbing performance of the HC absorbent 11. On the basis of the result thereof, absorbing performance of the HC absorbent 11 is diagnosed by the HC absorbent fatigue judgment means 29 to announce to the driver by the fatigue announcing lamp 19 when fatigue is judged.

It should be appreciated that the center value ALPST and the center value ALPLN may be replace with an average value of the air/fuel ratio term REARHOS, a value derived by multiplying 1/2 to a sum of the maximum value and minimum value of the air/fuel ratio correction term REARHOS.

As can be appreciated from the discussion above, the diagnosis system for the engine according to the present invention can predict HC amount absorbed by the HC absorbent and perform diagnosis of the absorbing performance of the HC absorbent without causing deterioration of exhaust.

**Claims**

1. A diagnosis system for an engine (100) including an exhaust pipe (10), a hydrocarbon (HC) absorbent (11) arranged within said exhaust pipe (10), an upstream air/fuel ratio sensor (12) arranged upstream of said HC absorbent (11) and detecting a wide range air/fuel ratio of an exhaust gas, a downstream air/fuel ratio sensor (13) arranged downstream of said HC absorbent (11) and detecting rich or lean with respect to stoichiometric air/fuel ratio of the exhaust gas, and a control unit (16), characterised by

   said control unit (16) including means (31) for correcting an air/fuel ratio upstream of said HC absorbent, means (30) for correcting an air/fuel ratio downstream of said HC absorbent, and means (28) for predicting a HC absorbing amount of said HC absorbent, said means (31) for correcting the air/fuel ratio upstream of said HC absorbent correcting and controlling an output value of said upstream air/fuel ratio sensor (12) toward lean, said means (28) for predicting the HC absorbing amount of said HC absorbent (11) predicting an absorbing performance of said HC absorbent on the basis of a difference between an output value of said upstream air/fuel ratio sensor (12) and a predetermined value C during a period from a timing where a temperature of said HC absorbent (11) becomes higher than or equal to a predetermined value A and the output value of said upstream air/fuel ratio sensor (12) is corrected and controlled toward lean to a timing where the temperature becomes lower than or equal to a predetermined value B.

2. A diagnosis system for an engine (100) as set forth in claim 1, wherein said means (31) for correcting the air/fuel ratio upstream of said HC absorbent corrects and controls the output value of said upstream air/fuel ratio sensor (12) toward lean so that an output value of said downstream air/fuel ratio sensor (13) becomes constant.

3. A diagnosis system for an engine (100) as set forth in claim 1 or 2, wherein said means (28) for predicting the HC absorbing amount of said HC absorbent predicts the absorbing performance of said HC absorbent (11) from a value derived by integrating a value calculated by multiplying a difference between the output value of said downstream air/fuel ratio sensor (13) and said predetermined value C by an inflow air amount of the engine (100), over a predetermined period.

4. A diagnosis system for an engine (100) including an exhaust pipe (10), a hydrocarbon (HC) absorbent (11) arranged within said exhaust pipe (10), a downstream air/fuel ratio sensor (13) arranged downstream of said HC absorbent (11) and detecting a wide range air/fuel ratio of an exhaust gas or detecting rich or lean with respect to stoichiometric air/fuel ratio of the exhaust gas, and a control unit (16), characterised by

   said control unit (16) including means (30) for correcting an air/fuel ratio downstream of said HC absorbent (11) and means (28) for predicting a HC absorbing amount of said HC absorbent (11), said means (30) for correcting the air/fuel ratio downstream of said HC absorbent (11) correcting and controlling a correction value of an air/fuel ratio control of a fuel amount or air amount to be supplied to a combustion chamber (9a) of the engine (100) toward lean, and said means (28) for predicting the HC absorbing amount of said HC absorbent (11) predicting an absorbing performance of said HC absorbent (11) on the basis of a difference between an output value of said upstream air/fuel ratio sensor (12) and a predetermined value C during a period from a timing where a temperature of said HC absorbent (11) becomes higher than or equal to a predetermined value A and the correction amount of said air/fuel ratio control is corrected and controlled toward lean to a timing where the temperature becomes lower than or equal to a predetermined value E.

5. A diagnosis system for an engine (100) as set forth in claim 4, wherein said means (31) for correcting the air/fuel ratio upstream of said HC absorbent (11) corrects and controls the output value of said upstream air/fuel ratio sensor (12) toward lean so that an output value of said downstream air/fuel ratio sensor (13) becomes constant.

6. A diagnosis system for an engine (100) as set forth in any one of claims 1 to 5, wherein said means (30) for correcting the air/fuel ratio downstream of said HC absorbent (11) includes means (30a) for measuring or predicting temperature of the HC absorbent (11).

7. A diagnosis system for an engine (100) as set forth in any one of claims 1 to 6, wherein said means (28) for predicting the HC absorbing amount of said HC absorbent (11) starts prediction of absorbing performance of said HC absorbent (11) when rich condition of the output value of said downstream air/fuel ratio sensor (13) is maintained for a predetermined period.

8. A diagnosis system for an engine (100) as set forth in any one of claims 1 to 7, wherein at least a catalytic converter (18) or a nitrogen oxide ($NO_x$) catalyst is provided on downstream of said HC absorbent (11).

9. A diagnosis system for an engine (100) as set forth in any one of claims 1 to 8, wherein said control unit (16) comprises means (29) for making judgement of fatigue of said HC absorbent on the basis of an output signal of the means (28) for predicting the HC absorbing amount of said HC absorbent (11), and means (19) for announcing fatigue of said HC absorbent (11) on the basis of the output signal of the means (29) for making judgement of fatigue of said HC absorbent (11).

# FIG. 1

EP 1 128 033 A2

# FIG. 2

## FIG. 3

16

| BASIC FUEL INJECTION AMOUNT CALCULATING MEANS |
27

TI

×

28

| HC ABSORPTION AMOUNT ESTIMATING MEANS |

29

| HC ABSORBENT FATIGUE JUDGMENT MEANS |

19

VO2R

| HC ABSORBENT DOWNSTREAM AIR/ FUEL RATIO CORRECTING MEANS |

30

REARHOS

| HC ABSORBENT UPSTREAM AIR/ FUEL RATIO CORRECTING MEANS |

RABF

31

ALPHA

2

7

8

3

12

11

13

15

## FIG. 4

REARHOS     31     HC ABSORBENT UPSTREAM
AIR/FUEL RATIO
CORRECTING MEANS

TABF (+)(+) → (○) → (-)(+) → (○) → DLTABF → | PI CONTROL | → ALPHA

RABF

## FIG. 5

START     CALCULATION CYCLE:10 [ms]

121 — FEEDBACK CONDITION SATISFIED? —NO→

YES↓

122 — DLTABF=RABF- (TABF+REARHOS)

123 — LAMP=KP×DLTABF

124 — LAMI=LAMLz+KI×DLTABF

125 — ALPHA=LAMP+LAMI+1

126 — ALPHA=1

END

*FIG. 6*

30 HC ABSORBENT DOWNSTREAM AIR/FUEL RATIO CORRECTING MEANS

AIR FLOW RATE

REVOLUTION SPEED

HC ABSORBENT TEMPERATURE ESTIMATING MEANS

30a

TADSBER

HC RELEASING JUDGMENT MEANS

30b

FDESORP

VO2R

PI CONTROL MEANS

30c

0

1

0

REARHOS

## FIG. 7

CALCULATION CYCLE:10 [ms]

START

141
DESORP NOT RESET EVEN ONCE AFTER STARTING ENGINE — NO

YES

142
TADSBER ≧ TDESORP — NO

YES

143
|REARHOS| ≦ HCHOS CONTINUED K TIMES OR MORE? — NO

YES

FDESORP=0

FDESORP=1

FDESORP=0

END

## FIG. 8

```
┌─────────────────┐
│     START       │   CALCULATION CYCLE : 10 [ms]
└─────────────────┘
         │
         ▼
    ╱───────────╲  151
   ╱  FDESORP=1  ╲  NO ──────────────────────────────────────┐
   ╲             ╱                                            │
    ╲───────────╱                                            │
         │ YES                                               │
         ▼                                                   │
    ╱───────────────╲  152                                   │
   ╱ VO2R≧VO2RMAX    ╲  NO ──────────┐                       │
   ╲                 ╱               │                       │
    ╲───────────────╱                │                       │
         │ YES                       ▼                       │
         │                  ╱───────────────╲  154           │
         │                 ╱ VO2R≦VO2RMIN    ╲  NO ───┐      │
    153  │                 ╲                 ╱         │      │
         │                  ╲───────────────╱         │      │
         ▼                        │ YES               │      │
┌──────────────────────┐          │         155       │      │
│ REARHOS=REARHOSz+DLL │          ▼                    │      │
└──────────────────────┘  ┌──────────────────────┐    │      │
         │                │ REARHOS=REARHOSz-DLR │    │  156 │
         │                └──────────────────────┘    │      │
         │                        │                    ▼      │
         │                        │          ┌──────────────────┐
         │                        │          │ REARHOS=REARHOSz │
         │                        │          └──────────────────┘
         │                        │                    │   157 │
         │                        │                    │       ▼
         │                        │                    │  ┌──────────┐
         │                        │                    │  │ REARHOS=0│
         │                        │                    │  └──────────┘
         │                        │                    │       │
         ▼◄───────────────────────┴────────────────────┴───────┘
         │
         ▼
┌─────────────────┐
│      END        │
└─────────────────┘
```

## FIG. 9

```
        ┌─────────────┐
        │    START    │   CALCULATION CYCLE:1O [ms]
        └─────────────┘
               │
  161          ▼
       ╱─────────────────╲        NO
      ⟨   FDESORP=1       ⟩──────────────────────┐
       ╲─────────────────╱                       │
               │                                 │
             YES                152              │
                                                 │
  162                                            │
   ┌─────────────────────────┐     163           ▼
   │ IADSHC                  │          ╱──────────────╲      NO
   │ =GADSHC×IADSHCz+        │         ⟨  FCDIAG=1      ⟩────────────────┐
   │ ((1-GADSHC)×QA×(RABF-TABF)) │      ╲──────────────╱                 │
   └─────────────────────────┘              │                           │
               │                          YES                           │
               │                                                        │
               │          164                          164              │
               │      ┌──────────────┐          ┌──────────────────┐   │
               │      │ IADSHC=O     │          │ IADSHC=IADSHCz    │   │
               │      │ IADSHCz=O    │          └──────────────────┘   │
               │      └──────────────┘                  │               │
               │              │                         │               │
               ▼              ▼                         │               │
       ◄───────┴──────────────┴─────────────────────────┴───────────────┘
               │
               ▼
        ┌─────────────┐
        │     END     │
        └─────────────┘
```

## FIG. 10

```
        ┌──────────────┐
        │    START     │   CALCULATION CYCLE:10[ms]
        └──────┬───────┘
               │
               ▼
171 ──  ╱ FDESORPz=1 ╲ ──── NO ──────────┐
        ╲ FDESORP=0  ╱                    │
               │ YES                       │
               ▼                           │
172 ──  ╱  IADSHC          ╲ ── NO ──┐     │
        ╲ ≦RAGE×IADSHCMAX  ╱         │     │
               │ YES                 │     │
               ▼                     │     │
        ┌──────────────────┐         │     │
173 ──  │ HC ABSORBENT     │         │     │
        │ FATIGUE          │         │     │
        │ ALARM LAMP ON    │         │     │
        └──────┬───────────┘◄────────┘     │
               │                           │
               ▼                           │
        ┌──────────────────┐               │
174 ──  │    FCDIAG=1      │               │
        └──────┬───────────┘               │
               │◄──────────────────────────┘
               ▼
        ┌──────────────┐
        │     END      │
        └──────────────┘
```

FIG. 11

## FIG. 12

## FIG. 13

EP 1 128 033 A2

# FIG. 14

## FIG. 15

16

BASIC FUEL
INJECTION AMOUNT
CALCULATING MEANS

27

TI

×

28

HC ABSORPTION
AMOUNT
ESTIMATING MEANS

29

HC ABSORBENT
FATIGUE
JUDGMENT MEANS

19

VO2R

HC ABSORBENT
DOWNSTREAM AIR/
FUEL RATIO
CORRECTING MEANS

REARHOS

30

7

2

8

3

11

13A
(13B)

15

# FIG. 16

ABSORBING AMOUNT
CALCULATION

HC ABSORBENT
TEMPERATUE
(ESTIMATED VALUE
OR ACTUALLY
MEASURED VALUE)

| HC ABSORB | HC RELEASE |

A

AIR/FUEL RATIO
CORRECTION TERM

DLTRHOS

G
E

HC ABSORBENT
DOWNSTREAM A/F
SENSOR OUTPUT

VO2R

T0          T1          TIME

STOICHIOMETRIC
AIR/FUEL RATIO

(ABSORBED HC AMOUNT)

$$\alpha \int_{T0}^{T1} (DLTRHOS \times AIR\ FLOW\ RATE)\,dt$$

# FIG. 17

ABSORBING AMOUNT
CALCULATION

RELEASE COMPLETE

HC ABSORB | HC RELEASE

HC ABSORBENT
TEMPERATUE
(ESTIMATED VALUE
OR ACTUALLY
MEASURED VALUE)

A

ALPST

DLTALP

AIR/FUEL RATIO
CORRECTION TERM

G

E

ALPLN

HC ABSORBENT
DOWNSTREAM A/F
SENSOR OUTPUT

VO2R

STOICHIOMETRIC
AIR/FUEL RATIO

TO

T1

TIME

(ABSORBED HC AMOUNT)

$$\alpha \int_{T0}^{T1} (DLTALP \times AIR\ FLOW\ RATE)\,dt$$

## *FIG. 18*

VEHICLE SPEED [km/h]

CATALYTIC CONVERTER (℃)

ACTIVATING TEMPERATURE

POST CATALYTIC CONVERTER HC [ppm]

TIME(s)

## *FIG. 19*

HC ABSORBING RATE

ABSORB — RELEASE

CATALYST TEMPERATURE [℃]

0    Td

# FIG. 20

PURIFICATION
EFFICIENCY

NOx

CO

HC,CO

STOICHIOMETRIC
AIR/FUEL RATIO

AIR/FUEL RATIO

# FIG. 21

A/F SENSOR
OUTPUT

STOICHIOMETRIC
AIR/FUEL RATIO

AIR/FUEL RATIO

# *FIG. 22*

O₂ SENSOR OUTPUT

STOICHIOMETRIC AIR/FUEL RATIO

AIR/FUEL RATIO